**Europäisches Patentamt**

**European Patent Office**

**Office européen des brevets**

(11) Veröffentlichungsnummer: **0 012 268**
**A1**

(12) # EUROPÄISCHE PATENTANMELDUNG

(21) Anmeldenummer: **79104730.1**

(22) Anmeldetag: **28.11.79**

(51) Int. Cl.³: **B 29 C 17/02,** B 29 D 7/22

(30) Priorität: **30.11.78 DE 2851726**

(43) Veröffentlichungstag der Anmeldung: **25.06.80**
**Patentblatt 80/13**

(84) Benannte Vertragsstaaten: **AT FR GB NL SE**

(71) Anmelder: **Hagner, Hans, Pfahlberg 18,**
**D-7295 Dornstetten 3 (DE)**

(72) Erfinder: **Hagner, Hans, Pfahlberg 18,**
**D-7295 Dornstetten 3 (DE)**

(74) Vertreter: **Mayer, Friedrich, Dr. et al, Patentanwälte Dr.**
**F. Mayer Dipl.-Phys. G. Frank Westliche 24,**
**D-7530 Pforzheim (DE)**

(54) **Verfahren und Vorrichtung zum Prägen von Faltkanten in thermoplastischen Folien.**

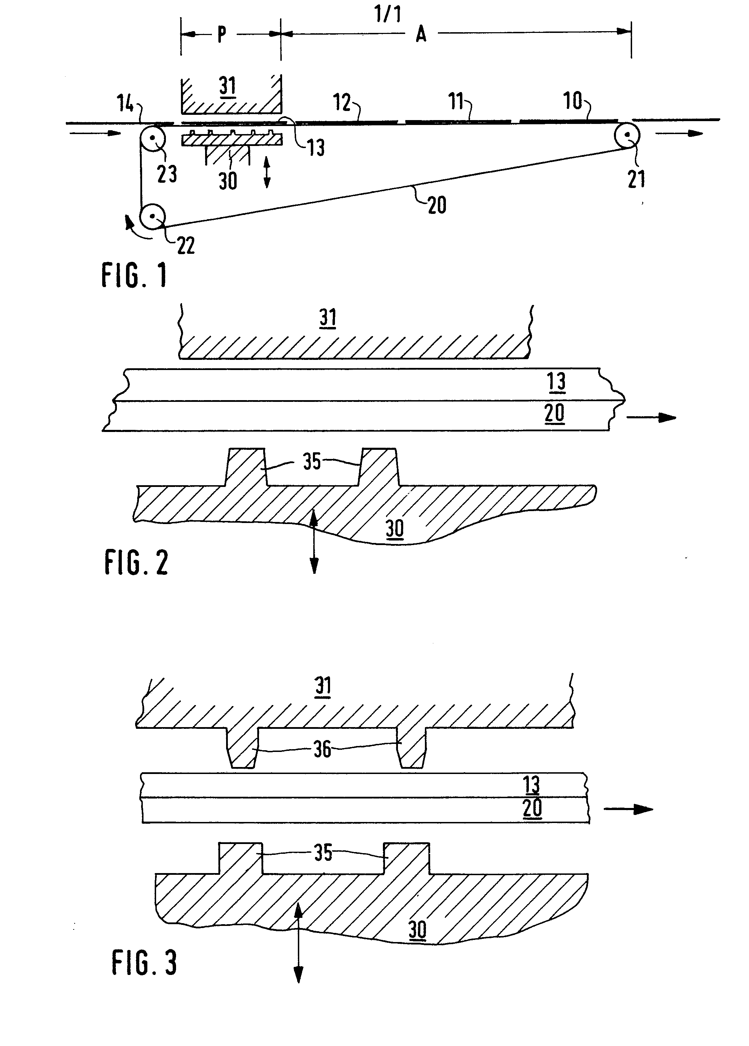

(57) Verfahren zum Prägen von Faltkanten in Faltschachtel-zuschnitte (13), wobei ein Transportband (20) die Faltschach-telzuschnitte (13) zwischen einem Prägewerkzeug (30) und einem Gegenwerkzeug (31) durchführt, die Plastifizierungs-wärme durch Heranführen des beheizten unteren Werkzeu-ges (30) an das Transportband (20) den Faltschachtelzu-schnitten (13) zugeführt wird, worauf die Prägung der Falt-kante erfolgt und wobei nach erfolgter Prägung das Trans-portband (20) mit den geprägten Faltschachtelzuschnitten (13) weiterfährt und diese zur Auskühlung auf dem Trans-portband (20) für die Auskühldauer liegenbleiben, worauf sie von Transportband (20) abgenommen werden können. Die Prägung der Faltkanten kann dabei entweder von oben in die Faltschachtelzuschnitte (13) oder von unten durch das Transportband (20) hindurch in diese erfolgen (Fig. 1).

EP 0 012 268 A1

**BEZEICHNUNG GEÄNDERT**
siehe Titelseite

Hans Hagner, Pfahlberg 18, 7295 Dornstetten 3
Verfahren zum Prägen von Faltkanten in
thermoplastischen Folien

Die Erfindung betrifft ein Verfahren zum Prägen von
Faltkanten in Faltschachtelzuschnitte aus thermoplastischen Kunststoff-Folien, wobei die Folie im
Bereich der zu prägenden Linie durch Wärmezufuhr zumindest teilweise plastifiziert wird und durch Eindrücken eines Werkzeuges die Prägelinie erzeugt wird.

Ein derartiges Verfahren ist aus der DE-OS 2 236 617
bekannt. Dort werden die Prägelinien, die als Faltkanten einer Faltschachtel dienen sollen, durch ein
erhitztes Falzmesser gerillt. Dies hat den Nachteil,
daß keine sauberen Prägelinien entstehen, da zwangsläufig Kunststoffpartikel am Falzmesser infolge der
Plastifizierung der Folie kleben bleiben.

Aus der DE-PS 2 541 324 ist ein Verfahren bekannt, bei
dem die Prägelinien durch Hochfrequenzeinwirkung erzeugt
werden. Auch bei diesem Verfahren kommt außer der Dauer
der Hochfrequenzeinwirkung noch eine Abkühlzeit hinzu,
während der die zu prägende thermoplastische Folie unter
dem Prägewerkzeug verbleibt.

Dies hat bei beiden bekannten Verfahren zur Folge, daß
bei einer Taktdauer von ca. 2-3 Sekunden nur 20-30
Arbeitstakte pro Minute gefahren werden können.

Es ist weiterhin bekannt ("Plastverarbeiter", 29. Jahrgang 1978, Nr. 3, Seite 123), bei dem sogenannten Thermokontaktverfahren, wie es auch in der DE-OS 2 236 617 zugrundeliegt, die erforderliche Rückkühlzeit nach dem eigentlichen Schweißvorgang an einem Ort zur Verfügung zu stellen, der außerhalb der Schweißwerkzeuge liegt, wodurch eine Steigerung des Arbeitstaktes möglich ist. Die dort geschilderte Einrichtung ist jedoch zur Vornahme von Prägungen nicht geeignet.

Aus dem deutschen Gebrauchsmuster 1 827 592 ist es weiterhin bekannt, für das Heißprägen von durchlaufenden Warenbahnen aus thermoplastischen Kunststoffen zwei Transportbänder vorzusehen, von denen das eine die vorgewärmte Kunstoff-Folie einem Prägespalt zuführt, und das andere die geprägte Folie hinter dem Prägespalt weiter transportiert. Hierbei handelt es sich jedoch um eine Vorrichtung zum Heißprägen, bei der die gesamte Kunststoffbahn mehr oder weniger plastifiziert wird, woraus sich die Notwendigkeit ergibt, Durchhänge und dadurch erfolgende Zugbeanspruchungen zu vermeiden. Eine derartige Problemstellung tritt bei der Prägung von Linien in thermoplastische Kunststoff-Folien nicht auf.

Ausgehend von diesem Stand der Technik stellt sich die Erfindung die Aufgabe, die Herstellung von Faltkanten in Kunststoff-Folien mit hoher Taktzahl zu ermöglichen, wobei letztere außerdem eine einwandfreie Qualität haben sollen.

Dies erreicht die Erfindung durch die im kennzeichnenden Teil des Patentanspruches 1 angegebenen Lösungsmittel.

Die Verwendung des Transportbandes einerseits und die Zuführung der zur Erzeugung der Prägung notwendigen Plastifizierungswärme andererseits durch das Transportband hindurch vermeidet das Klebenbleiben der Prägelinie am Werkzeug bzw. Gegenwerkzeug, da die Folie nur mit dem Transportband und dem nicht oder nur niedrig temperierten Gegenwerkzeug in Berührung kommt.

Durch die Verlagerung des Auskühlvorganges auf einen Bereich hinter dem Prägewerkzeug verkürzt sich die Taktzeit auf die unmittelbar zum Prägen erforderliche Zeit, die Auskühlung der Prägelinien auf dem Transportband ermöglicht dann auch das problemlose Abheben der Folie von Transportband nach dem Auskühlen. Die erfindungsgemäße Kombination des Transportbandes und der Wärmezufuhr durch das Transportband erlaubt also die schnelle Herstellung von einwandfreien Prägelinien im Thermokontaktverfahren.

Ausgestaltungen der Erfindung können den Unteransprüchen entnommen werden.

Die Erfindung wird nun anhand zweier Ausführungsbeispiele mittels Zeichnungen näher erläutert. Es zeigen:

Figur 1    eine schematische Darstellung der Vorrichtung zur Durchführung des erfindungsgemäßen Verfahrens,

Figur 2    eine Detaildarstellung eines ersten Ausführungsbeispieles des Prägebereiches,

Figur 3    eine Detaildarstellung eines zweiten Ausführungsbeispieles des Prägebereichs.

Die in Figur 1 zur Durchführung des erfindungsgemäßen Verfahrens dargestellte, beispielhafte Anordnung zeigt ein wärmeleitfähiges Trägerband 20, das über geeignete Umlenkrollen 21,22 und 23 über ein beheiztes Prägewerkzeug geführt wird. Auf dieses Trägerband 20 werden Folienzuschnitte 10-14 aufgelegt und vom Prägeband 20 in den Prägebereich P zwischen dem beheizten Prägewerk-

- 4 -

zeug 30 und einem Gegenwerkzeug 31 befördert. Zur Prägung wird das beheizte Prägewerkzeug 30 von unten an das Trägerband 20 herangeführt. Das auf ca. 300° Celcius erwärmte Prägewerkzeug 30 gibt die zur Plastifizierung des Kunststoffes im Bereich der zu prägenden Linie erforderliche Wärme durch das Trägerband 20 an die Kunststoff-Folie ab. Danach wird das Trägerband 20 zusammen mit der im Bereich der Prägelinien zumindest teilweise plastifizierten Folie an ein gegenüberliegendes Gegenwerkzeug gedrückt, wodurch die beabsichtigten Prägelinien in die Folie 13 eingebracht werden. Unmittelbar nach dem Prägevorgang wird das Trägerband 20 weitergefahren un die noch erhitzte Folie bleibt in Kontakt mit dem Trägerband 20 und gelangt in eine Abkühlzone A, an deren Ende sie schließlich von Trägerband 20 gelöst wird. Das Gegenwerkzeug 31 kann beim Prägervorgang entweder Zimmertemperatur haben oder ebenfalls leicht vorgewärmt sein.

Figur 2 zeigt ein erstes Ausführungsbeispiel des Prägebereiches P in einer Detaildarstellung. Man erkennt, daß das Trägerband 20 die zu prägende Folie 13 durch den Prägebereich durchführt, wobei unterhalb des Trägerbandes das Prägewerkzeug 30 mit Prägestegen 35 versehen ist. Beim Prägevorgang wird das Prägewerkzeug in Richtung der Pfeile angehoben und drückt über die Prägestege 35 das Trägerband in die infolge der hohen Hitzeeinwirkung schnell plastifizierte Folie im Bereich der Prägestege 35. Bei diesem Ausführungsbeispiel ist das Gegenwerkzeug 31 als glatte Gegenfläche ausgebildet, so daß die Prägestege 35 hier als Prägewerkzeuge durch das Transportband 20 hindurch die Prägelinie in der Folie 13 anbringen.

Figur 3 zeigt ein zweites Ausführungsbeispiel des Prägebereichs P in einer Detaildarstellung.

Im Unterschied zur Figur 2 weist hier das Gegenwerkzeug 31 Ausformungen 36 aus, die den Prägestegen 35 des Prägewerkzeuges 30 gegenüberliegen. Bei der Wahl eines Werkzeugquerschnittes, wie er in Figur 3 angedeutet ist, wirken die Ausformungen 36 des Gegenwerkzeuges 31 als Prägewerkzeuge, wogegen die Stege 35 lediglich als Unterlage und zur Zufuhr der Plastifizierungswärme dienen. In diesem Falle wird also eine Prägelinie auf der Oberseite der Folie 13 erzeugt. Da die Ausformungen 36 des Gegenwerkzeuges 31, die die eigentliche Prägung durchführen, aber nicht oder nur schwach temperiert sind, da die Zufuhr der Plastifizierungswärme vom Trägerband 2o her erfolgt, lassen sich diese Ausformungen 36 nach dem Prägen wieder leicht aus der Folie 13 entfernen, ohne daß Zerstörungen der Prägelinie durch hängengebliebene Kunststoffpartikel befürchtet werden müssen.

Unabhängig von der jeweiligen Gestaltung der Werkzeuge zu der Erzeugung der Prägelinie erlaubt das erfindungsgemäße Verfahren die Herstellung von qualitativ hochwertigen Prägelinien bei einer Produktionsgeschwindigkeit von bis zu 60 Arbeitstakten pro Minute.

- 1 -

0012268

<u>P a t e n t a n s p r ü c h e :</u>

1. Verfahren zum Prägen von Faltkanten in Faltschachtelzuschnitte aus thermoplastischen Kunststoff-Folien, wobei die Folie im Bereich der zu prägenden Linie durch Wärmezufuhr zumindest teilweise plastfiziert wird und durch Eindrücken eines Werkzeuges die Prägelinie erzeugt wird, dadurch gekennzeichnet, daß die Folie (13)auf einem wärmeleitfähigen Transportband (20) befördert wird, daß das Transportband (20) über ein dauerbeheiztes Prägewerkzeug (30) geführt wird, dessen Wärme der Folie (13) durch das Transportband (20) durch zur Plastifizierung zugeführt wird, daß zur Erzeugung der Prägung das Transportband (20) und die Folie (13) an ein Gegenwerkzeug (31) gedrückt werden, und daß die Folie nach der Prägung für eine Auskühlzeit der Prägelinien auf dem weiterfahrenden Transportband (20) liegenbleibt.

2. Verfahren nach Anspruch 1, dadurch gekennzeichnet, daß das beheizte Prägewerkzeug (30) eine Temperatur von 250° Celsius - 400° Celsius aufweist.

3. Verfahren nach Anspruch 1, dadurch gekennzeichnet, daß das Gegenwerkzeug (31) Raumtemperatur aufweist.

4. Verfahren nach Anspruch 1, dadurch gekennzeichnet, daß das Gegenwerkzeug (31) auf eine Temperatur oberhalb der Raumtemperatur temperiert ist.

5. Verfahren nach Anspruch 1, dadurch gekennzeichnet, daß das Gegenwerkzeug (31) als ebene Platte ausgebildet ist.

6. Verfahren nach Anspruch 1, dadurch gekennzeichnet, daß das Gegenwerkzeug (31) Ausformungen (36) zur Prägung der Kunststoff-Folie aufweist.

7. Verfahren nach Anspruch 1, 5 und 6, dadurch gekennzeichnet, daß das Prägewerkzeug Stege (35) aufweist,
die den Ausformungen (36) des Gegenwerkzeuges gegenüberliegen.

8. Verfahren nach Anspruch 1, dadurch gekennzeichnet,
daß das Transportband (20) ein umlaufendes Endlosband
ist.

9. Verfahren nach Anspruch 1, dadurch gekennzeichnet,
daß das Transportband (20) aus Poliamid besteht.

10. Vorrichtung zur Durchführung des Verfahrens nach
Anspruch 1, gekennzeichnet durch ein dauerbeheiztes
Prägewerkzeug (30), ein darüber angeordnetes Gegenwerkzeug (31) und ein Transportband (20) zwischen dem dauerbeheizten Prägewerkzeug (30) und dem Gegenwerkzeug (31).

0012268

FIG. 1

FIG. 2

FIG. 3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 1 467 972 (ROBERTSON) <br> * Seite 3, rechte Spalte, Absatz 2 bis Seite 4, linke Spalte; Zusammenfassung; Figuren 1,4,9, 10 * | 1,3,4, 6,10 |
| | -- | |
| | US - A - 3 758 649 (J. FRATTAROLA) <br> * Spalte 4, Zeilen 22-65; Spalte 6, Zeilen 40-52; Ansprüche; Figur 2 * | 1-4,8, 10 |
| | -- | |
| | FR - A - 1 518 073 (EASTMAN KODAK) <br> * Figuren 2,3 * | 6,7 |
| | -- | |
| A | US - A - 2 451 597 (W.R.WHEELER) | |
| A | FR - A - 1 039 678 (DYNAMIT) | |
| A | US - A - 3 241 182 (M. KESSLER) | |
| | ----- | |

**KLASSIFIKATION DER ANMELDUNG (Int.Cl. 3)**

B 29 C 17/02
B 29 D 7/22

**RECHERCHIERTE SACHGEBIETE (Int. Cl. 3)**

B 29 C 17/02
B 29 D 7/22

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-03-1980 | LABEEUW |

EPA form 1503.1 06.78